# EUROPÄISCHE PATENTSCHRIFT

(11) **EP 2 212 561 B1**
(45) Veröffentlichungstag und Bekanntmachung des Hinweises auf die Patenterteilung: **19.10.2011**
(21) Anmeldenummer: 08852373.3
(22) Anmeldetag: 20.11.2008
(51) Int. Cl.: F04D 29/02, F04D 29/42, F01D 25/26, F04D 27/02

(54) **GEHÄUSE FÜR EINEN RADIALVERDICHTER**
HOUSING FOR A RADIAL COMPRESSOR
CARTER POUR UN COMPRESSEUR RADIAL

(30) Priorität: 20.11.2007 DE 102007055617; 20.11.2007 DE 202007016282 U
(43) Veröffentlichungstag der Anmeldung: 04.08.2010
(73) Patentinhaber: Mann + Hummel GmbH, 71638 Ludwigsburg (DE)
(72) Erfinder: TSCHECH, Thomas, 71672 Marbach (DE); SCHICK, Hedwig, 71732 Tamm (DE); HUURDEMAN, Bernhard, 71691 Freiberg (DE); CHLADEK, Hartmut, 64354 Reinheim (DE)
(86) Internationale Anmeldenummer: PCT/EP2008/065881
(87) Internationale Veröffentlichungsnummer: WO 2009/065881

(56) Entgegenhaltungen:
- EP-A- 0 376 225
- WO-A-2005/033517
- DE-A1- 2 103 331
- DE-A1- 2 706 110
- US-A- 3 876 327
- US-A- 4 052 133
- US-A- 4 776 760
- US-A1- 2006 051 205

## Beschreibung

### Technisches Gebiet

Die Erfindung betrifft ein Gehäuse für einen Radialverdichter, insbesondere für einen Turbolader der im Oberbegriff des Anspruchs 1 angegebenen Gattung.

### Stand der Technik

Aus der DE 102 60 042 A1 ist ein Turboladergehäuse eines Abgasturboladers eines Verbrennungsmotors bekannt. Das Verdichtergehäuse ist aus mehreren Teilen zusammengesetzt, die aus einem Duroplast bestehen. Die Teile werden zum Erreichen der Gasdichtheit miteinander verklebt.

In der DE 103 14 209 B3 wird ein Radialverdichter als Teil eines Abgasturboladers beschrieben, der aus zwei schalenförmigen Gehäuseteilen zusammengesetzt ist, welche aus einem Duroplast-Werkstoff gespritzt sind. Dieser Werkstoff weist eine hohe Dichte auf, so dass im Vergleich zu sonst üblichen Ladergehäusen aus Metall kein Gewichtsvorteil besteht. Dem großen Gewicht wird in der DE 103 14 209 B3 versucht entgegenzuwirken, indem in eines der Gehäuseteile kammerförmige Aussparungen eingebracht sind, die durch Trennwände voneinander separiert sind und sich im wesentlichen konzentrisch um eine Lufteintrittsachse erstrecken.

Nachteilig bei den bekannten Anordnungen ist, dass die genannten Werkstoffe, nämlich Duroplaste, relativ schwer zu verarbeiten sind, da strenge Bedingungen für die Klebeverbindung einzuhalten sind. Weiter nachteilig sind die Sprödigkeit, eine hohe Wasseraufnahme, eine große akustische Abstrahlung und hohe Herstellkosten.

Verdichtergehäuse aus thermoplastischen Kunststoffen lassen sich einfacher und kostengünstiger herstellen. Die Wandstärken der Gehäuseteile werden aus Gründen des Materialeinsatzes und Gewichts optimiert. Allerdings besteht die Gefahr, dass beim Abbruch von Teilen des Verdichterrades im Betrieb die metallischen Splitter mit großer Energie radial gegen Wandteile des Gehäuses geschleudert werden und das Gehäuse durchdringen.

Bei Radialverdichtern muss eine ausreichende Betriebssicherheit gewährleistet sein. Aufgrund der hohen Raddrehzahlen von Turboladern besteht die Gefahr, dass bei einer Beschädigung des Verdichterrades Metallsplitter das Gehäuse des Verdichters durchdringen und Bauteile im Motorraum der Brennkraftmaschine beschädigen.

Ein weiteres Radialverdichtergehäuse für Abgasturbolader ist aus der DE 27 06 110 A bekannt die alle Merkmale des Oberbegriffs des Anspruchs 1 offenbart.

### Offenbarung der Erfindung

Der Erfindung liegt die Aufgabe zugrunde, ein leicht bauendes Gehäuse für einen Radialverdichter zu schaffen, bei dem im Falle der Beschädigung des Verdichterrades die Gefahr von umher fliegenden Teilen des Verdichterrades reduziert ist.

Diese Aufgabe wird erfindungsgemäß mit den Merkmalen des Anspruches 1 gelöst. Die Unteransprüche geben zweckmäßige Weiterbildungen an.

Das erfindungsgemäße Gehäuse für einen Radialverdichter besteht aus mindestens zwei aus Kunststoff gefertigten Gehäuseteilen, die einerseits zur Aufnahme eines Verdichterrades ausgebildet sind und zwischen denen andererseits ein spiralförmiger Verdichterkanal (im Folgenden als Spiralkanal bezeichnet) gebildet ist. Des Weiteren weist das Gehäuse eine das Verdichterrad zumindest teilweise ringförmig umschließende Sicherheitsstruktur auf. Die Sicherheitsstruktur bewirkt eine erheblich größere Steifigkeit und Festigkeit des Gehäuses, wodurch die Sicherheit im Falle eines Bruchs des Verdichterrades signifikant gesteigert ist. Absplitternde Radteile, die aufgrund der hohen Umdrehungsgeschwindigkeit des Verdichterrades tangential nach außen geschleudert werden, treffen auf die Sicherungsstruktur auf, welche die Wandungen des Gehäuses verstärkt und einer Verformung bzw. einem Bruch aufgrund der kinetischen Energie der Radteile entgegenwirkt.

Gemäß einer ersten vorteilhaften Ausführung der Sicherheitsstruktur befindet sich ein Stabilisierungselement in einem als Ringraum ausgeführten Hohlraum, der zwischen einem Verdichterradaufnahmeraum und dem Spiralkanal angeordnet ist. Dieser Ringraum schließt sich somit unmittelbar in Radialrichtung an das Verdichterrad an, wobei das im Ringraum befindliche Stabilisierungselement bei einem Unfall Bruchstücke des Verdichterrades abfängt.

Der Ringraum ist vorzugsweise von zwei Gehäuseteilen begrenzt, bei denen es sich insbesondere um ein innen liegendes Mittelteil als eine den Verdichterradaufnahmeraum bildende Laufschale und ein Oberteil als Verdichterfrontteil handelt, welches auf das Mittelteil aufgesetzt wird. Das Stabilisierungselement ist vorzugsweise einteilig mit der Mittelschale ausgebildet, wobei grundsätzlich zusätzlich oder alternativ auch eine einteilige Ausführung des Stabilisierungselements mit dem Oberteil in Betracht kommt. Bei einer einteiligen Ausbildung mit dem Mittelteil erstreckt sich das Stabilisierungselement von der Mittelteilwandung aus radial nach außen in den Ringraum hinein.

Gemäß einer zweiten vorteilhaften Ausführung ist die Sicherheitsstruktur als Stabilisierungselement einteilig mit dem Unterteil als Verdichterrückwand des Gehäuses ausgebildet. In diesem Fall ist es vorteilhaft, dass sich das Stabilisierungselement entlang der radialen Außenseite des Unterteils erstreckt. Somit umschließt das Stabilisierungselement das Gehäuse und damit auch den Verdichterradaufnahmeraum entlang der Gehäuseaußenwand, wobei absplitternde Radteile zunächst von Wandungen gebremst werden, die sich im Gehäuseinneren befinden, und erst nach dem Durchschlagen dieser radial innen liegenden Wandungen auf das Stabilisierungselement treffen, welches dem gesamten Gehäuse zusätzlich Stabilität verleiht und insbesondere für eine ausreichende Sicherheit gegen ein Durchschlagen des Gehäuses von abgesplitterten Radteilen sorgt. Da die Radteile von den weiter innen liegenden Wandungen abgebremst werden, genügt es grundsätzlich, das Stabilisierungselement mit geringerer Stärke auszuführen.

Grundsätzlich ist es auch möglich, sowohl ein innen liegendes Stabilisierungselement vorzusehen, welches zweckmäßigerweise in dem das Verdichterrad umschließenden Ringraum angeordnet ist, als auch das zusätzliche, radial außen liegende Stabilisierungselement auf der Gehäuseaußenseite anzuordnen.

Die Versteifungselemente des Stabilisierungselements sind vorzugsweise als radiale Versteifungsrippen ausgebildet, die sich in regelmäßigem oder unregelmäßigem Abstand entlang der Länge des Stabilisierungselementes in Radialrichtung erstrecken. Über die Länge des Stabilisierungselementes gesehen, welches sich in Umfangsrichtung des Gehäuses erstreckt, können die Versteifungsrippen eine wechselnde radiale Ausdehnung aufweisen, die an die Gegebenheiten im bzw. am Gehäuse des Radialverdichters angepasst ist, insbesondere im Falle des innen liegenden Stabilisierungselementes an die Form des aufnehmenden Hohlraumes.

Zur weiteren Verbesserung der Stabilität kann im Stabilisierungselement ein Verbindungssteg vorgesehen sein, der die einzelnen Versteifungsrippen miteinander verbindet und sich in Längsrichtung des Stabilisierungselementes erstreckt. Der Verbindungssteg hat eine erhebliche Steigerung der Festigkeit und der Stabilität zur Folge, insbesondere in Richtung der Längsachse des Stabilisierungselementes und damit auch quer zur Ebene der einzelnen Versteifungsrippen.

Die Gehäuseteile sind vorzugsweise aus Kunststoff gefertigt, insbesondere aus einem thermoplastischen Kunststoff, der zum Einsatz im Spritzgussverfahren geeignet ist, beispielsweise Polyphenylensulfid (PPS). Der Kunststoff kann mit Füllstoffen, wie etwa Glasfasern gefüllt sein, um die Eigenschaften weiter zu verbessern.

Über den Umfang verteilt können auch mehrere einzelne Stabilisierungselemente vorhanden sein, die jeweils mit Versteifungselementen versehen sind. Sowohl in dem Ringraum, welcher unmittelbar das Verdichterrad umschließt, als auch auf der Außenseite des Gehäuses können jeweils nur ein oder auch mehrere Stabilisierungselemente angeordnet sein.

In Achsrichtung erstreckt sich der Ringraum vorteilhafterweise zumindest über die Achslänge des Verdichterrades, wobei ggf. auch eine Erstreckung im Wesentlichen über die Länge eines der Gehäuseteile in Betracht kommt, welches den Ringraum begrenzt.

In Radialrichtung weist der Ringraum eine Erstreckung auf, die das Einsetzen des Stabilisierungselementes erlaubt. Bezogen auf die Wandstärke der begrenzenden Wandung liegt die radiale Erstreckung bevorzugt bei einem Mehrfachen der Wandstärke, beispielsweise beim Drei- bis Fünffachen der Wandstärke. Des Weiteren kann es zweckmäßig sein, die radiale Erstreckung des Ringraumes über den Umfang gesehen an die Form des spiralförmigen Verdichterkanals anzupassen. Da der Verdichterkanal in Umfangsrichtung einen veränderlichen Durchmesser aufweist, steht in Abschnitten kleineren Durchmessers des Verdichterkanals eine größere radiale Erstreckung für den Ringraum zur Verfügung als in Abschnitten mit größerem Durchmesser.

Die Herstellung des Verdichtergehäuses aus dem thermoplastischen Kunststoff, insbesondere aus PPS, weist den Vorteil der leichten Herstellbarkeit sowie der guten Recycelbarkeit auf. Bei der Herstellung im Spritzgussverfahren kann auf eine Kernschmelztechnik verzichtet werden, es erfolgt lediglich eine Herstellung im Spritzgussverfahren mittels einfach aufgebauter, in Auf-Zu-Richtung verschließbare Werkzeuge. Ein weiterer Vorteil liegt in der Herstellung komplexer Geometrien des Gehäuses, beispielsweise einem Spiralkanal mit mehreren Hinterschnitten. Schließlich lassen sich thermoplastische Kunststoffe mit hoher Maßgenauigkeit herstellen, so dass auf eine Nacharbeit verzichtet werden kann bzw. sich diese in Grenzen hält. Außerdem ist der thermoplastische Kunststoff hitzebeständig, druckdicht und weist bei einem geringen Gewicht gute Schall isolierende Eigenschaften auf.

Ein weiterer Vorteil liegt in der Möglichkeit, Gehäuseteile mit konstanten Wandstärken auszubilden, so dass Materialanhäufungen vermieden werden und das Risiko von Lunkerbildung reduziert ist.

Die Gehäuseteile können zusammengeschweißt werden, insbesondere im Wege des Ultraschallschweißens. Um die für den Schweißvorgang erforderliche Ultraschallsonde (Sonotrode) in einfacher Weise an der vorgesehenen Schweißnaht positionieren zu können, befindet sich vorteilhafterweise der Kontaktbereich zwischen den zu verschweißenden Gehäuseteilen benachbart zu einer axialen Stirnseite des Gehäuses, insbesondere benachbart zur Anströmseite. Außerdem liegen die Kontaktbereiche zwischen den Gehäuseteilen vorzugsweise mit Abstand zum spiralförmigen Verdichterkanal, sie sind damit aus dem kritischen Spiralbereich herausgenommen, so dass die Luftführung an der Innenseite der Spirale nicht durch einen unerwünschten, durch das Schweißen erzeugten Austrieb in der Wandung beeinträchtigt wird.

Gemäß einer weiteren vorteilhaften Ausführung besteht das Gehäuse insgesamt aus drei Gehäuseteilen, bei denen es sich um das Oberteil als Verdichterfrontteil, dem Unterteil als Verdichterrückwand und dem Mittelteil als innen liegende Laufschale handelt. Oberteil und Unterteil bilden die äußeren Gehäuseteile, zwischen denen das Mittelteil positioniert ist, welche zur Aufnahme des Verdichterrades dient. Der Ringraum ist vorzugsweise zwischen dem Mittelteil und dem Oberteil gebildet. Sowohl im Ringraum als auch an dem Unterteil können jeweils einteilige ausgebildete Stabilisierungselemente vorgesehen sein.

Gemäß einer möglichen Ausgestaltung der Erfindung ist das Mittelteil an einem das Verdichterrad umgebenden axialen Abschnitt mit radial nach außen gerichteten Versteifungsrippen versehen. Weiter ist es zweckmäßig, dass zwischen dem Oberteil und dem Unterteil ein Spiralkanal ausgebildet ist, wobei im Unterteil die Wandung des Spiralkanals durch eine sich in Umfangsrichtung erweiternde Wölbung gebildet ist. Dadurch kann die Vorrichtung zur Eindämmung oder Rückhaltung gezielt an dieser Wölbung, die gegebenenfalls den größten Belastungen ausgesetzt wird, ausgebildet werden. Eine Ausführung hierzu besteht darin, dass in dem den Spiralkanal umgebenden Bereich des Unterteils Versteifungsrippen angeformt sind.

Gemäß einer alternativen Ausgestaltung ist in dem den Spiralkanal umgebenden Bereich des Unterteils in das Kunststoffmaterial ein Netz oder ein Gewebe eingebettet. Das Netz oder Gewebe besteht vorzugsweise aus Aramidfasern. Das Netz kann außen aufgebracht werden oder ins Spritzgusswerkzeug eingelegt und mit Kunststoffmaterial umspritzt und so in das Gehäuseteil eingebettet werden.

In einer weiteren Ausführungsform sind die oben beschriebenen Sicherungsstrukturen miteinander kombiniert an einem Bauteil umgesetzt, um eine hohe Betriebssicherheit zu gewährleisten.

### Kurze Beschreibung der Zeichnungen

Weitere Vorteile und zweckmäßige Ausführungen sind den weiteren Ansprüchen, der Figurenbeschreibung und den Zeichnungen zu entnehmen. In den Figuren sind gleiche Bauteile mit gleichen Bezugszeichen versehen. Es zeigen:
Fig. 1 einen axialen Schnitt durch das Gehäuse eines Radialverdichter, bestehend aus drei einzelnen Gehäuseteilen aus thermoplastischem Kunststoff, wobei zwischen einem innen liegenden Mittelteil und einem Oberteil ein den Verdichterradaufnahmeraum umgreifender Ringraum mit darin aufgenommenen Stabilisierungselement mit Versteifungsrippen gebildet und das Stabilisierungselement einteilig mit dem Mittelteil ausgebildet ist,
Fig. 2 einen axialen Schnitt durch das Gehäuse mit einem eingebetteten Netz,
Fig. 3 einen Schnitt durch das Gehäuse mit Versteifungsrippen und eingebettetem Netz,
Fig. 4 einen Schnitt durch ein Gehäuse eines Radialverdichters mit Versteifungsrippen,
Fig. 5 eine perspektivische Ansicht auf das Gehäuse, jedoch ohne Oberteil,
Fig. 6 eine perspektivische Ansicht des fertig montierten Gehäuses einschließlich Oberteil,
Fig. 7 eine perspektivische Ansicht auf das Mittelteil mit dem Stabilisierungselement mit Versteifungsrippen,
Fig. 8 eine perspektivische Ansicht auf das Unterteil mit einteiligem Stabilisierungselement einschließlich Versteifungsrippen auf der radialen Außenseite.

### Ausführungsformen der Erfindung

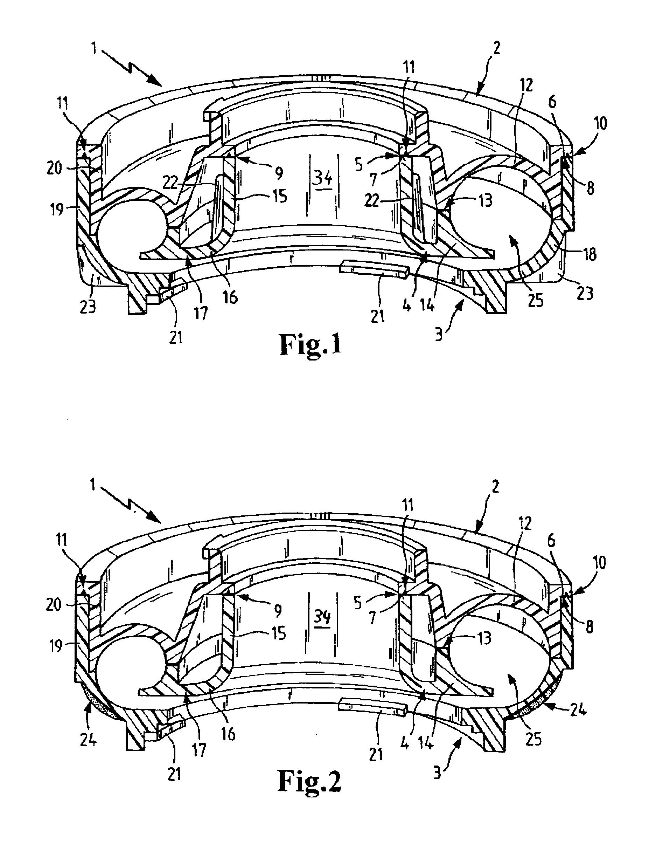

Die Fig. 1 zeigt ein aus drei Gehäuseteilen gebildetes Gehäuse 1 für einen Radialverdichter eines Abgasturboladers einer Brennkraftmaschine, bei der die Abgase einer Brennkraftmaschine ein Turbinenrad antreiben, welches drehfest mit einem Verdichterrad verbunden ist, das im Gehäuse 1 drehbar gelagert ist. Durch die Rotation des Verdichterrades wird Verbrennungsluft im Ansaugtrakt angesaugt und auf einen erhöhten Ladedruck verdichtet, unter dem die Verbrennungsluft den Zylindern der Brennkraftmaschine zugeführt wird. Zwischen einem Oberteil 2 und einem Unterteil 3, ist ein Mittelteil 4 angeordnet. Diese Gehäuseteile 2, 3, 4 bestehen aus einem thermoplastischen Kunststoff, vorzugsweise aus PPS (Polyphenylsulfide). An dem Oberteil 2 sind zwei ringförmige Verbindungsflächen 5, 6 ausgebildet, wobei an der Verbindungsfläche 5 eine entsprechende Stirnfläche 7 des Mittelteils 4 und an der Verbindungsfläche 6 eine Stirnfläche 8 des Unterteils 3 liegt. Die Verbindungsfläche 5 und die Stirnfläche 7 sowie die Verbindungsfläche 6 und die Stirnfläche 8 bilden jeweils Schweißzonen 9, 10. Zur Aufnahme von geschmolzenem Material beim Zusammenschweißen dienen umlaufende Nuten 11.

An dem Oberteil 2 ist eine nach unten offene Wölbung 12 geformt, die sich ringförmig erstreckt und in Umfangsrichtung erweitert ist. An dem radial innen liegenden Ende dieser Wölbung 12 liegt an einer Anlagefläche 13 ein an die erweiterte Form angepasster Rundungsabschnitt 14, der am Mittelteil 4 angeformt ist. Das Mittelteil 4 umfasst außerdem einen axialen Abschnitt 15 mit einer Rundung 16 zu einem radialen Abschnitt 17, an dem der Rundungsabschnitt 14 angeformt ist.

Das Unterteil 3 ist im Wesentlichen als eine ringförmige, sich in Umfangsrichtung erweiternde Wölbung 18 ausgebildet, an deren radialer Außenseite sich eine axial nach oben erstreckende Hülse 19 anschließt, an deren oberem Ende sich die Stirnfläche 8 befindet. An der Innenwandung der Hülse 19 liegt ein axialer Abschnitt 20 des Oberteils 2 an, so dass in diesem Bereich das Gehäuse 1 doppelwandig ist. Das Unterteil 3 ist an seiner Unterseite zur Aufnahme eines in der Zeichnung nicht dargestellten Gehäusebodens ausgebildet, wobei an dem Unterteil 3 radial nach innen gerichtete Vorsprünge 21 vorgesehen sind.

Wie sich aus Fig. 1 ergibt, bilden die Wölbung 12 am Oberteil 2, der Rundungsabschnitt 14 am Mittelteil 4 und die Wölbung 18 am Unterteil 3 einen Spiralkanal 25.

Als Vorrichtung zur Eindämmung oder Rückhaltung sind an der radial äußeren Wandung des axialen Abschnitts 15, der den Verdichterradaufnahmeraum 34 bildet, eine Vielzahl von Rippen 22 und an der Außenseite der Wölbung 18 eine Vielzahl von Rippen 23 angeformt, durch die eine Versteifung des Gehäuses 1 erreicht ist. Beim Abbrechen von Teilen des Verdichterrades sind durch diese Versteifungsmaßnahmen Vorkehrungen getroffen, die ein Durchschlagen des Gehäuses 1 verhindern.

Im Ausführungsbeispiel der Fig. 2 ist ein Gehäuse 1 für einen Radialverdichter dargestellt, das im Wesentlichen mit demjenigen der Fig. 1 übereinstimmt. Die Bezugszeichen für gleiche Teile sind identisch mit Fig. 1. Als Vorrichtung zur Eindämmung oder Rückhaltung ist an dem Gehäuse 1 in Fig. 2 im Bereich der Wölbung 18 eine Verstärkung 24 vorgesehen, die aus einem Netz oder Gewebe, vorzugsweise aus Aramidfasern besteht. Dieses Netz oder Gewebe wird bei der Herstellung des Unterteils 3 in die Spritzgussform eingelegt, so dass es vom Kunststoffmaterial umschlossen und in dieses eingebettet wird.

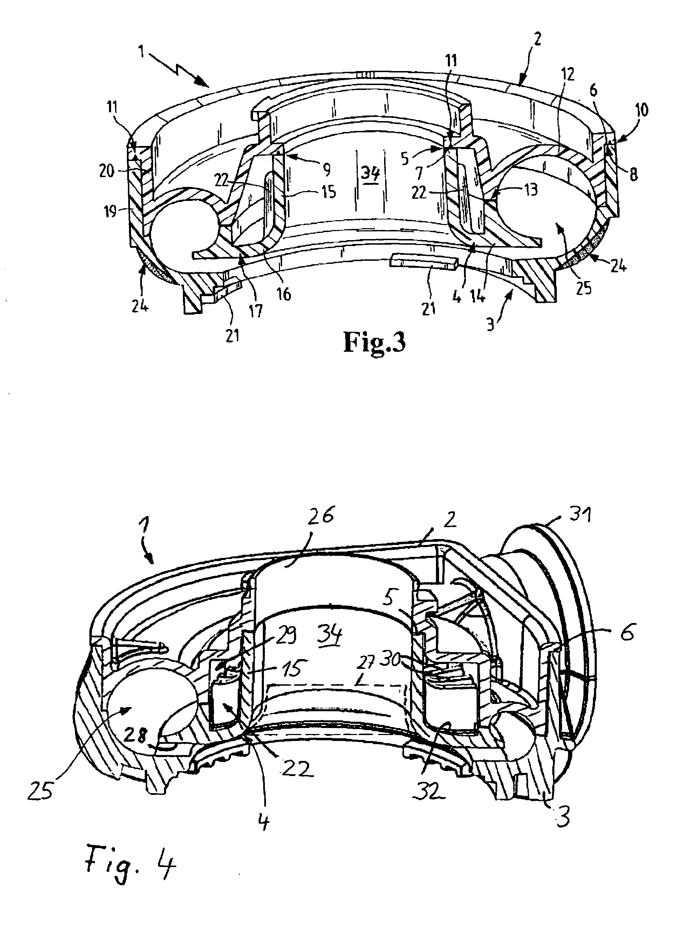

Die Fig. 3 zeigt den axialen Schnitt durch das Gehäuse 1 für einen Radialverdichter, dessen Aufbau und Gestaltung demjenigen in den Fig. 1 und 2 entspricht. Für gleiche Teile stimmen daher die Bezugszeichen mit denjenigen in Fig. 1 und 2 überein. Als Vorrichtung zur Eindämmung oder Rückhaltung ist im Ausführungsbeispiel der Fig. 3 an dem Unterteil 3 im Bereich der Wölbung 18 die Versteifung 24 mit einem Netz oder Gewebe aus Aramidfasern vorgesehen und an dem axialen Abschnitt 15 des Mittelteils 4 ist eine Vielzahl von Rippen 22 angeordnet, die einstückig mit dem Mittelteil 4 ausgeführt sind. Mit dieser Kombination von Versteifungs- und Sicherungsmaßnahmen wird einem Durchschlagen sowohl des Mittelteils 4 als auch des Unterteils 3 entgegengewirkt. Das Oberteil 2 ist diesen Gefahren von abgebrochenen Teilen des Verdichterrades nicht ausgesetzt, da das Gehäuse 1 im Bereich der Hülse 19 und des axialen Abschnitts 20 doppelwandig ist und bei der Umlenkung von Teilen in Axialrichtung die Bewegungsenergie dieser Teile deutlich reduziert wird.

Das in Fig. 4 dargestellte Gehäuse 1 zeigt den am Unterteil 3 angeformten Auslassstutzen 31 und den im Oberteil 2 angeformten Ansaugstutzen 26. Das Gehäuse 1 ist dreiteilig aufgebaut und umfasst ein als Verdichterrückwand ausgeführtes Unterteil 3, ein Oberteil 2 als Verdichterfrontteil und ein Mittelteil 4 als innen liegende Laufschale, die einen Verdichterradaufnahmeraum 34 als axialen Abschnitt 15 zur Aufnahme und Lagerung des Verdichterrades begrenzen, das im Ausführungsbeispiel mit Bezugszeichen 27 versehen und nur andeutungsweise mit gestrichelter Linie dargestellt ist. Die Verbrennungsluft wird dem Verdichterrad 27 über einen Ansaugstutzen 26 axial zugeführt, der im Oberteil 2 gebildet ist. Die komprimierte Verbrennungsluft wird radial über einen Diffusor 28 in einen Spiralkanal 25 geleitet, der von dem Oberteil 2 und dem Unterteil 3 begrenzt ist und in einen Auslassstutzen 31 mündet, über den die komprimierte Verbrennungsluft schließlich den Zylindern der Brennkraftmaschine zugeführt wird.

Zwischen dem Unterteil 2 und dem Mittelteil 4 ist ein umlaufender Ringraum 29 gebildet, der den axialen Abschnitt 15 radial umschließt und von dem axialen Abschnitt 15 über die Wandung des Mittelteils 4 strömungsdicht separiert ist. Der Ringraum 29 weist im Wesentlichen die gleiche axiale Erstreckung auf wie das Mittelteil 4 und damit auch der axiale Abschnitt 15.

Im Ringraum 29 befindet sich ein Stabilisierungselement 22, das einteilig mit dem Mittelteil 4 ausgebildet ist und auf der radialen Außenseite der stutzenförmigen Wandung der Laufschale angeordnet ist. Das Stabilisierungselement 22, besteht aus einer Vielzahl einzelner Versteifungsrippen 30, die sich jeweils in Radialrichtung ausgehend von der Außenseite der stutzenförmigen Wandung erstrecken und gegebenenfalls eine zusätzliche Komponente in Umfangsrichtung aufweisen. Die Versteifungsrippen 30 befinden sich innerhalb des Ringraumes 29 und verteilen sich in Umfangsrichtung über die Länge des Ringraumes. In Radialrichtung füllen die Versteifungsrippen 30 den Ringraum 29 vollständig aus, so dass die radial außen liegende, freie Stirnseite der Versteifungsrippen an der Innenseite der radial außen liegenden Begrenzungswand des Ringraumes 29 anliegt. Das Stabilisierungselement 22, schließt das Verdichterrad 27 ein und übernimmt zusätzlich zur Stärkung des Gehäuses 1 auch eine Sicherheitsfunktion bei einem Unfall, indem absplitternde Radteile des Verdichterrades 27, die tangential nach außen geschleudert werden, von dem Stabilisierungselement 22, aufgefangen werden.

Die Gehäuseteile 2, 3, 4 bestehen aus thermoplastischem Kunststoff und werden im Wege des Ultraschallschweißens zusammengefügt. Dies erfolgt in der Weise, dass eine Sonotrode an die Kontaktbereiche 6, zwischen Unterteil 3 und Oberteil 2 bzw. 5 zwischen Mittelteil 4 und Oberteil 2 gesetzt wird, um den Prozess des Ultraschallschweißens durchzuführen. Der erste Kontaktbereich 6 zwischen Unterteil 3 und Oberteil 2 befindet sich im radial außen liegenden Bereich, benachbart zur Stirnseite, die die Anströmseite des Gehäuses bildet. Der Kontaktbereich 5 liegt demgegenüber radial nach innen versetzt zwischen der Mittelteil 4 und Oberteil 2 unmittelbar benachbart zum axialen Abschnitt 15 des Verdichterradaufnahmeraumes, jedoch ebenfalls auf der der Anströmseite zugewandten Seite des Gehäuses. In allen Ausführungsbeispielen bestehen die Gehäuseteile aus einem thermoplastischen Kunststoff, der spritzgießfähig ist, beispielsweise aus Polyphenylensulfid (PPS).

Das Mittelteil 4 ist in der Weise geformt, dass im Bereich des Ringraumes 29 in dem Mittelteil 4 eine Ringnut 32 gebildet ist, die von dem aufzusetzenden Oberteil 2 zu dem Ringraum 29 ergänzt wird. In Fig. 4 ist des Weiteren ein Auslassstutzen 31 eingezeichnet, über den die im Spiralkanal 25 gesammelte, verdichtete Verbrennungsluft abgeleitet wird.

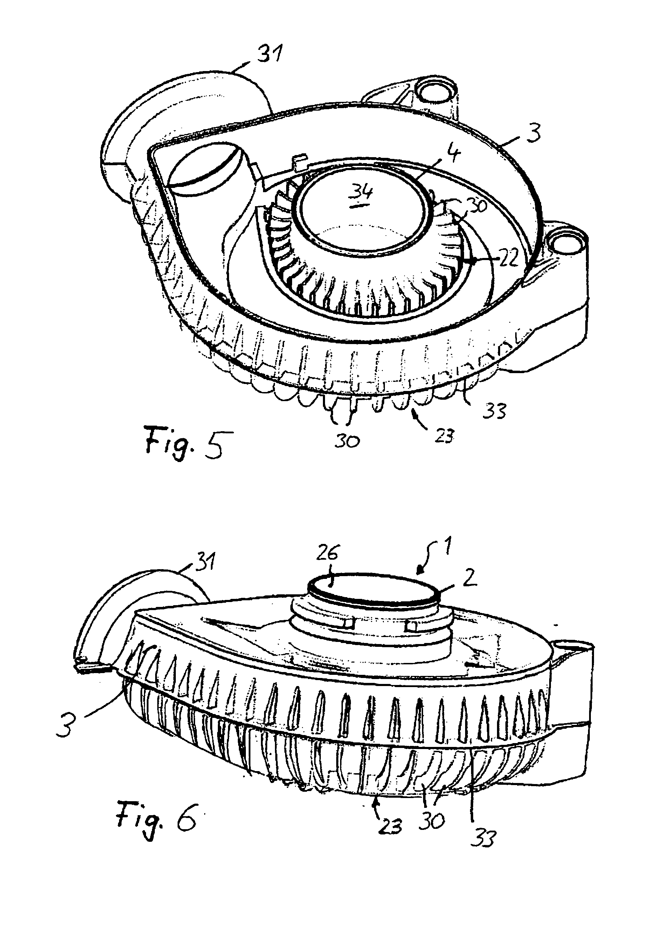

In Fig. 5 ist das Gehäuse 1 mit noch nicht aufgesetztem Oberteil 2 dargestellt. Zu erkennen ist das Unterteil 3 und das Mittelteil 4 mit der Mehrzahl von Versteifungsrippen 30, die das Stabilisierungselement 22, 23 bilden, einteilig mit dem Mittelteil 4 ausgebildet sind und sich radial nach außen erstrecken. Die Versteifungsrippen 30 erstrecken sich über den gesamten Umfang um den axialen Abschnitt 5 des Verdichterradaufnahmeraumes 34 begrenzenden Stutzen 26 des Mittelteils 4.

Ein weiteres Stabilisierungselement 23 befindet sich auf der radialen Außenseite der Wandung der des Unterteils 3. Dieses Stabilisierungselement 23 besteht ebenso wie das innen liegende, an dem Mittelteil 4 ausgebildete Stabilisierungselement 22 aus einzelnen Versteifungsrippen 30, die sich an der Wandung radial nach außen erstrecken. Die Versteifungsrippen 30 sind von einem durchgehend ausgebildeten Verbindungssteg 33 verbunden, der sich in Umfangsrichtung erstreckt und eine erhebliche Steigerung der Stabilität und Steifigkeit zur Folge hat. Insgesamt erstreckt sich das Stabilisierungselement einschließlich der Versteifungsrippen und dem Verbindungssteg nur über einen Teilumfang des Unterteils.

In Fig. 6 ist eine Gesamtansicht des fertig montierten Gehäuses 1 mit Oberteil 2, Unterteil 3 und Mittelteil 4 dargestellt. Außen am Umfang sind die Stabilisierungselemente 23 mit den Versteifungsrippen 30 angeordnet mit einem umlaufenden Verbindungssteg 33. Je nach Bauraumverhältnissen können die Versteifungsrippen auch durch mehrere Verbindungsstege miteinander verbunden sein.

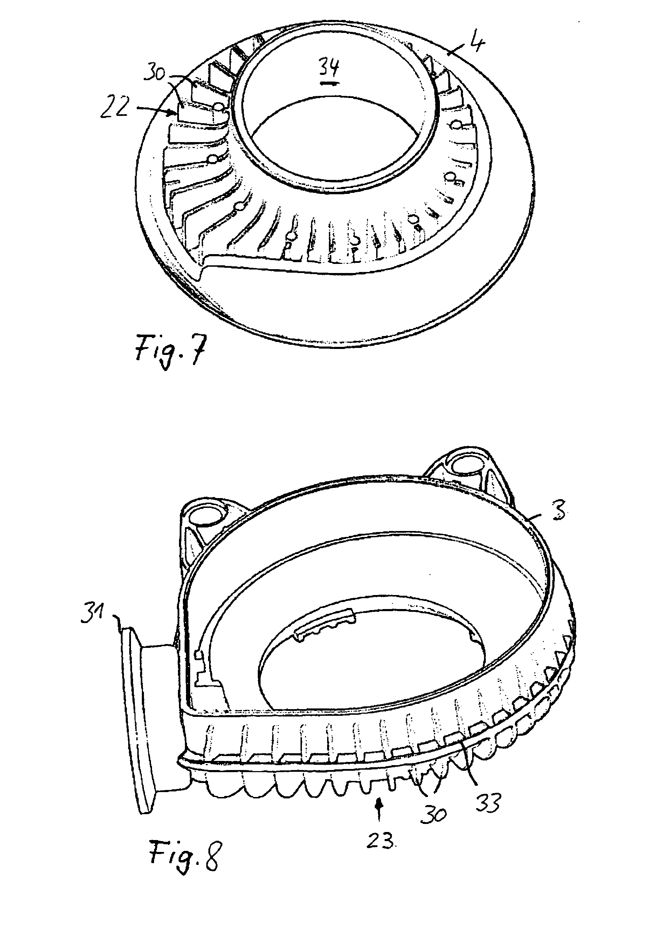

In den Figuren 7 und 8 sind das Mittelteil 4 bzw. das Unterteil 2 jeweils in perspektivischer Einzeldarstellung gezeigt. Aus beiden Darstellungen ist zu entnehmen, dass die radiale Erstreckung der Versteifungsrippen 30 sich in Umfangsrichtung ändert, so dass Versteifungsrippen 30 an einer Umfangsposition eine andere radiale Erstreckung haben verglichen mit Versteifungsrippen an einer anderen Umfangsposition. Außerdem ist zu erkennen, dass die Versteifungsrippen 30 am Mittelteil 4 eine konkav geformte Oberseite aufweisen, wohingegen die Versteifungsrippen 30 am Unterteil 3 eine konvex-gekrümmte Form aufweisen.

## Patentansprüche

1. Radialverdichtergehäuse, insbesondere für einen Turbolader, umfassend ein Gehäuse (1) mit mindestens zwei aus Kunststoff gefertigte Gehäuseteilen (2, 3, 4), wobei ein Verdichterradaufnahmeraum (34) und ein Spiralkanal (25) vorgesehen sind, wobei eine den Verdichterradaufnahmeraum (34) und/oder das Gehäuse (1) zumindest teilweise ringförmig umschließende Sicherungsstruktur (22, 23, 24, 30, 33) vorgesehen ist, die zumindest mit einem der Gehäuseteile (2, 3, 4) unlösbar verbunden ist, wobei die Sicherungsstruktur (22, 23, 24, 30, 33) Stabilisierungselemente (22, 23, 30, 33) aufweist, welche einteilig mit einem Gehäuseteil (2, 3, 4) insbesondere in Spritzgusstechnik ausgebildet sind, **dadurch gekennzeichnet, dass** in das Gehäuse (1) zwischen einem axialen Abschnitt (15) und dem Spiralkanal (25) ein als Ringraum (29) ausgebildeter Hohlraum eingebracht ist, der den Verdichterradaufnahmeraum (34) ringförmig umschließt und in dem das Stabilisierungselement (22) aufgenommen ist.

2. Radialverdichtergehäuse nach Anspruch 1, **dadurch gekennzeichnet, dass** der Ringraum (29) von zwei Gehäuseteilen (3, 4) begrenzt ist, insbesondere die den Ringraum (29) begrenzenden Gehäuseteile (3, 4) als innen liegende, den axialen Abschnitt (15) bildendes Mittelteil (4) und als Oberteil (2) ausgebildet sind.

3. Radialverdichtergehäuse nach Anspruch 2, **dadurch gekennzeichnet, dass** das Stabilisierungselement (22) einteilig mit dem Mittelteil (4) ausgebildet ist.

4. Radialverdichtergehäuse nach einem der Ansprüche 1 bis 3, **dadurch gekennzeichnet, dass** eines der Gehäuseteile (2, 3, 4) als Unterteil (3) ausgeführt ist, mit dem das Stabilisierungselement (23) einteilig ausgebildet ist.

5. Radialverdichtergehäuse nach Anspruch 4, **dadurch gekennzeichnet, dass** das Unterteil (3) über eine radiale Außenseite verfügt, an welcher sich das Stabilisierungselement (23) in radialer Richtung erstreckt.

6. Radialverdichtergehäuse nach einem der Ansprüche 1 bis 5, **dadurch gekennzeichnet, dass** die Stabilisierungselemente (22, 23) als mehrere über den Umfang verteilte radiale Versteifungsrippen (30) ausgebildet sind.

7. Radialverdichtergehäuse nach Anspruch 6, **dadurch gekennzeichnet, dass** zur Verbindung der Versteifungsrippen (30) zumindest ein Verbindungssteg (33) vorgesehen ist, welcher einstückig mit dem Gehäuseteil ausgebildet ist.

8. Radialverdichtergehäuse nach Anspruch 1, **dadurch gekennzeichnet, dass** die Sicherungsstruktur (22, 23, 24, 30, 33) eine Vorrichtung zur Eindämmung oder Rückhaltung von abgebrochenen Teilen des Verdichterrades aufweist.

9. Radialverdichtergehäuse nach Anspruch 8, **dadurch gekennzeichnet, dass** ein den Verdichterradaufnahmeraum (34) umgebendes Mittelteil (4) an einem axialen Abschnitt (15) mit radial nach außen gerichteten Versteifungsrippen (22) versehen ist.

10. Radialverdichtergehäuse nach Anspruch 8 oder 9, **dadurch gekennzeichnet, dass** zwischen dem ersten Gehäuseteil (2) und dem zweiten Gehäuseteil (3) ein Spiralkanal (25) ausgebildet ist, wobei im zweiten Gehäuseteil (3) die Wandung des Spiralkanals (25) durch eine sich in Umfangsrichtung erweiternde Wölbung (18) gebildet ist.

11. Radialverdichtergehäuse nach Anspruch 10, **dadurch gekenntzeichnet, dass** in dem Bereich der Wölbung (18) Versteifungsrippen (23) angeformt sind.

12. Radialverdichtergehäuse nach Anspruch 10, **dadurch gekennzeichnet, dass** in dem Bereich der Wölbung (18) in das Kunststoffmaterial als Verstärkung (24) ein Netz oder ein Gewebe eingebettet ist.

13. Radialverdichter, insbesondere für einen Turbolader, umfassend ein Gehäuse (1) mit einem Verdichterradaufnahmeraum (34), einem Spiralkanal (25) und einem Verdichterrad (27), **dadurch gekennzeichnet, dass** das Gehäuse (1) nach einem der vorangegangenen Ansprüche ausgestaltet ist.

## Claims

1. Radial compressor housing, in particular for a turbocharger, comprising a housing (1) with at least two housing components (2, 3, 4) made of plastic material, a compressor impeller installation space (34) and a spiral duct (25) being provided, a safety structure (22, 23, 24, 30, 33) enclosing at least partially in a ring-shaped manner the compressor impeller installation space (34) and/or the housing (1) being provided which is connected undetachably with at least one of the housing components (2, 3,4), the safety structure (22, 23, 24, 30, 33) featuring stabilizing elements (22, 23, 30, 33) which are designed as one-piece with one housing component (2, 3, 4) in particular using injection molding, **characterized in that** hollow space designed as annular space (29) being realized in the housing (1) between an axial section (15) and the spiral duct (25) which encloses the compressor impeller installation space (34) in a ring-shaped manner and in which the stabilizing element (22) is incorporated.

2. Radial compressor housing according to claim 1, **characterized in that** the annular space (29) is limited by two housing components (3, 4), that in particular the housing components (3, 4) limiting the annular space (29) are designed as middle part (4) and forming the axial section (15) and as upper part (2) installed inside.

3. Radial compressor housing according to claim 2, **characterized in that** the stabilizing element (22) is designed as one-piece with the middle part (4).

4. Radial compressor housing according to one of the claims 1 to 3, **characterized in that** one of the housing components (2, 3, 4) is designed as lower part (3) with which the stabilizing element (23) is designed as one-piece.

5. Radial compressor housing according to claim 4, **characterized in that** the lower part (3) has a radial exterior side where the stabilizing element (23) extends in radial direction.

6. Radial compressor housing according to one of the claims 1 to 5, **characterized in that** the stabilizing elements (22, 23) are designed as several stiffening ribs (30) distributed across the circumference.

7. Radial compressor housing according to claim 6, **characterized in that** for connecting the stiffening ribs (30) at least one connecting bar (33) is provided which is designed as one-piece with the housing component.

8. Radial compressor housing according to claim 1, **characterized in that** the safety structure (22, 23, 24, 30, 33) features a device for confining or retaining broken-off parts of the compressor wheel.

9. Radial compressor housing according to claim 8, **characterized in that** a middle part (4) enclosing the compressor impeller installation space (34) is provided at an axial section (15) with radially outwardly directed stiffening ribs (22).

10. Radial compressor housing according to claim 8 or 9, **characterized in that** a spiral duct (25) is designed between the first housing component (2) and the second housing component (3), the wall of the spiral duct (25) in the second housing component (3) being formed by a concavity (18) expanding in circumferential direction.

11. Radial compressor housing according to claim 10, **characterized in that** stiffening ribs (23) are integrally molded in the area of the concavity (18).

12. Radial compressor housing according to claim 10, **characterized in that** a mesh or fabric is incorporated as reinforcement (24) in the plastic material in the area of the concavity (18).

13. Radial compressor, in particular for a turbocharger, comprising a housing (1) with a compressor impeller installation space (34), a spiral duct (25) with a compressor wheel (27), **characterized in that** the housing (1) is designed according to one of the afore-mentioned claims.

## Revendications

1. Carter de compresseur centrifuge radial, notamment pour un turbocompresseur, comprenant un carter (1) avec au moins deux parties de carter (2, 3, 4) fabriquées en matière plastique, un logement pour roue de compresseur (34) et un canal en spirale (25) étant prévus et une structure de sécurité (22, 23, 24, 30, 33) encerclant, tout au moins partiellement, le logement pour roue de compresseur (34) et/ou le carter (1), qui est reliée de manière fixe au moins à l'une des parties de carter (2, 3, 4), la structure de sécurité (22, 23, 24, 30, 33) présentant des éléments de stabilisation (22, 23, 30, 33) qui sont exécutés, notamment par moulage par injection, en un bloc avec une partie de carter (2, 3, 4), **caractérisé en ce qu'**un espace creux réalisé en tant que logement annulaire (29) est placé dans le carter (1) entre une section axiale (15) et le canal en spirale (25), espace qui encercle le logement pour roue de compresseur (34) et dans lequel est logé l'élément de stabilisation (22).

2. Carter de compresseur centrifuge radial selon la revendication 1, **caractérisé en ce que** le logement annulaire (29) est limité par deux parties de carter (3, 4) et que notamment les parties de carter (3, 4) limitant le logement annulaire (29) sont exécutées comme partie médiane (4) formant la section axiale (15) et comme partie supérieure (2) intérieures.

3. Carter de compresseur centrifuge radial selon la revendication 2 **caractérisé en ce que** l'élément de stabilisation (22) est exécuté en un bloc avec la partie médiane (4).

4. Carter de compresseur centrifuge radial selon l'une des revendications 1 à 3, **caractérisé en ce que** l'une des parties de carter (2, 3, 4) est exécutée comme partie inférieure (3) avec laquelle l'élément de stabilisation (23) est exécuté en un bloc.

5. Carter de compresseur centrifuge radial selon la revendication 4, **caractérisé en ce que** la partie inférieure (3) dispose d'une face extérieure radiale sur laquelle s'étend l'élément de stabilisation (23) en sens radial.

6. Carter de compresseur centrifuge radial selon l'une des revendications 1 à 5, **caractérisé en ce que** les éléments de stabilisation (22, 23) sont exécutés sous forme de plusieurs nervures de renfort (30) radiales réparties sur la circonférence.

7. Carter de compresseur centrifuge radial selon la revendication 6, **caractérisé en ce qu'**au moins une nervure de raccord (33) qui est exécutée en un bloc avec la partie de carter est prévue pour relier les nervures de renfort (30).

8. Carter de compresseur centrifuge radial selon la revendication 1, **caractérisé en ce que** la structure de sécurité (22, 23, 24, 30, 33) présente un dispositif destiné à maintenir ou retenir des parties rompues de la roue de compresseur.

9. Carter de compresseur centrifuge radial selon la revendication 8, **caractérisé en ce qu'**une partie médiane (4) entourant le logement pour roue de compresseur (34) est pourvue, sur une section axiale (15), de nervures de renfort (22) dirigées vers l'extérieur en sens radial.

10. Carter de compresseur centrifuge radial selon la revendication 8 ou 9, **caractérisé en ce qu**'un canal en spirale (25) est formé entre la première partie de carter (2) et la deuxième partie de carter (3), la paroi du canal en spirale (25) étant formée, dans la deuxième partie de carter (3), par une courbure (18) s'élargissant en sens circonférentiel.

11. Carter de compresseur centrifuge radial selon la revendication 10, **caractérisé en ce que** des nervures de renfort (23) sont préformées dans la zone de la courbure (18).

12. Carter de compresseur centrifuge radial selon la revendication 10, **caractérisé en ce qu**'un filet ou un tissu est incorporé dans la matière plastique, dans la zone de la courbure (18), faisant office de renfort (24).

13. Compresseur centrifuge radial, notamment pour un turbocompresseur, comprenant un carter (1) avec un logement pour roue de compresseur (34), un canal en spirale (25) et une roue de compresseur (27), **caractérisé en ce que** le carter (1) est réalisé selon l'une des revendications précédentes.
